# FASCICULE DE BREVET EUROPEEN

(11) **EP 3 355 996 B1**
(45) Date de publication et mention de la délivrance du brevet: **23.10.2019**
(21) Numéro de dépôt: 16788552.4
(22) Date de dépôt: 29.09.2016
(51) Int. Cl.: A62B 7/14, A62B 25/00, A62B 18/08, A62B 18/02

(54) **COCKPIT D'AVION, ENSEMBLE COMPRENANT UN MASQUE RESPIRATOIRE ET UN DISPOSITIF DE RANGEMENT, AINSI QUE PROCÉDÉ DE RANGEMENT ET PROCÉDÉ D'UTILISATION D'UN TEL ENSEMBLE**
FLUGZEUGCOCKPIT, ANORDNUNG MIT EINER ATEMMASKE UND AUFBEWAHRUNGSVORRICHTUNG SOWIE AUFBEWAHRUNGSVERFAHREN UND VERFAHREN ZUR VERWENDUNG SOLCH EINER ANORDNUNG
AIRCRAFT COCKPIT, ASSEMBLY COMPRISING A RESPIRATORY MASK AND A STORAGE DEVICE, AS WELL AS STORAGE METHOD AND METHOD FOR USE OF SUCH AN ASSEMBLY

(30) Priorité: 29.09.2015 FR 1559219
(43) Date de publication de la demande: 08.08.2018
(73) Titulaire: Zodiac Aerotechnics, 78370 Plaisir (FR)
(72) Inventeur: SIBUET, Jean-Philippe, 78480 Verneuil sur Seine (FR); POTET, Olivier, 91620 La Ville Du Bois (FR); BOUCHET, Benoît, 75005 Paris (FR); BERTHET, Frédéric, 78650 Saulx Marchais (FR)
(74) Mandataire: Cabinet Plasseraud
(86) Numéro de dépôt international: PCT/FR2016/052499
(87) Numéro de publication internationale: WO 2017/055764

(56) Documents cités:
- US-A- 5 954 052
- US-A1- 2013 147 239
- US-A1- 2014 290 665

## Description

### Domaine de l'invention

L'invention concerne un ensemble pour fournir un gaz respiratoire à un membre d'équipage d'un avion.

L'invention concerne également un procédé de rangement d'un tel ensemble.

L'invention concerne en outre un procédé d'utilisation d'un tel ensemble.

### Contexte de l'invention

L'invention vise à fournir une solution de rangement et d'utilisation d'un système d'assistance fournissant un gaz respiratoire à un membre d'équipage, en cas par exemple de situation d'urgence. La fourniture de ce gaz respiratoire se fait à l'aide d'un masque respiratoire. Le masque respiratoire comprend un couvre-face oronasal, adapté pour s'appliquer sur le visage du membre d'équipage, autour de la bouche et du nez. Le masque respiratoire comprend également un harnais. Ce harnais permet de maintenir le couvre-face oronasal sur le visage du membre d'équipage. Le masque respiratoire peut comprendre en outre un écran de protection. L'écran de protection permet de protéger les yeux de l'utilisateur contre les éventuelles projections, en particulier de la fumée. L'écran de protection peut aussi supporter un dispositif d'affichage.

Dans une position de rangement, le masque respiratoire est disposé dans un dispositif de rangement, situé dans une cabine d'un avion commercial transportant des passagers et un équipage. L'avion comprend en outre un dispositif de pressurisation pressurisant la cabine afin de permettre aux passagers ainsi qu'aux membres de l'équipage de respirer normalement au sein de la cabine.

Le document US 5,954,052 divulgue à cet effet un ensemble selon le préambule de la revendication 1.

En cas de dépressurisation, l'utilisateur de l'équipement d'urgence, qui est habituellement le pilote ou le co-pilote, attrape le masque respiratoire qui est situé dans le dispositif de rangement. L'utilisateur place ensuite le masque respiratoire autour de sa tête afin de pouvoir respirer au travers du masque respiratoire, lui fournissant ainsi du gaz respiratoire.

Un dispositif de rangement d'un masque respiratoire est ainsi important afin de protéger le masque respiratoire lorsque celui-ci n'est pas utilisé. Un tel dispositif de rangement doit également être placé dans une position prédéfinie afin de permettre à un membre de l'équipage de rapidement saisir le masque et de le positionner sur son visage.

C'est pourquoi les dispositifs de rangement sont parfois placés dans le tableau de bord du cockpit, à portée de main du pilote ou du co-pilote. Dans la même logique, les dispositifs de rangement peuvent être placés en hauteur, à côté du pilote ou du co-pilote.

Lorsqu'une condition d'urgence est détectée, l'utilisateur a moins de 5 secondes pour attraper le masque et le positionner sur son visage. Il est donc important que le harnais puisse être facilement et rapidement déployé lorsqu'il est rangé dans son dispositif de rangement.

Afin de garantir un déploiement correct du masque du respiratoire, il est tout aussi important que le masque respiratoire soit rangé de façon appropriée dans le dispositif de rangement. Cette opération est toutefois délicate et peu intuitive.

Ainsi, un objet de l'invention est de fournir un dispositif de rangement et un procédé de rangement et d'utilisation de ce dispositif afin de permettre un rangement du masque respiratoire qui soit intuitif et qui permette un déploiement aisé et rapide du masque respiratoire.

### Exposé de l'invention

A cet effet, l'invention concerne un ensemble destiné en particulier à être disposé dans un cockpit d'avion à cabine pressurisée pour fournir un gaz respiratoire à un membre d'équipage, ledit ensemble comprenant un masque respiratoire comportant un couvre face oronasal et un harnais, le couvre face oronasal présentant une cavité respiratoire et étant adapté pour s'appliquer sur le visage du membre d'équipage autour de la bouche et du nez, le harnais forme une boucle adaptée pour s'étendre autour de la tête de l'utilisateur à l'opposé du couvre face oronasal afin de maintenir le couvre face oronasal sur le visage de l'utilisateur, et un dispositif de rangement, ledit dispositif de rangement comprenant une base et un plot, le plot est monté mobile par rapport à la base entre une position escamotée et une position sortie, le plot présente une surface de réception, la surface de réception du plot est adaptée pour recevoir le masque respiratoire dans une position de rangement dans laquelle le harnais maintient le couvre face oronasal contre la surface de réception du plot en enserrant le plot en formant une boucle s'étendant autour du plot, à l'opposé du couvre face oronasal, le masque respiratoire étant libérable par rapport au dispositif de rangement.

Le dispositif de rangement ainsi élaboré permet de faciliter l'opération de rangement du masque respiratoire dans le dispositif de rangement. Le plot permet également de présenter le masque respiratoire d'une façon telle que celui-ci est aisément saisissable par l'usager en condition d'utilisation. En outre, la surface de réception prévue sur le plot permet d'avoir systématiquement le même positionnement du masque respiratoire dans le dispositif de rangement, et d'éviter que le harnais vienne se bloquer ou s'emmêler dans la cavité respiratoire formée par le masque respiratoire.

Dans divers modes de réalisation de l'ensemble selon l'invention, on peut également avoir recours en outre à l'une et/ou à l'autre des dispositions suivantes :
- la surface de réception est périphérique et s'étend autour de l'axe longitudinal ;
- le harnais est expansible, le harnais présente un état déployé et un état rétracté ;
- le harnais forme une boucle adaptée pour s'étendre autour de la tête de l'utilisateur à l'opposé du couvre face oronasal afin de maintenir le couvre face oronasal sur le visage de l'utilisateur, lorsque le harnais est dans l'état rétracté, et dans la position de rangement, le harnais est dans l'état rétracté;
- le plot s'étend suivant un axe longitudinal entre une extrémité de liaison et une extrémité libre, et est relié à la base au niveau de l'extrémité de liaison, et le masque respiratoire est libérable par rapport au dispositif de rangement lorsque le harnais est dans l'état déployé par déplacement par rapport au plot à l'opposé de l'extrémité de liaison. Le masque respiratoire enserre ainsi le plot. Le masque respiratoire est donc maintenu en position pour son rangement adéquat. Lorsque le harnais est déployé, le masque respiratoire n'enserre plus le plot. Il est donc plus facile de saisir le masque respiratoire du dispositif de rangement.
- le plot présente globalement une forme cylindrique s'étendant autour de l'axe longitudinal. La forme cylindrique du plot présente l'avantage d'être globalement complémentaire à la boucle formée par le harnais. Cette forme sert ainsi de détrompeur et permet un rangement plus intuitif du masque respiratoire dans le dispositif de rangement.
- le plot présente une gorge sur sa surface de réception périphérique dans laquelle est reçu le harnais en position de rangement. La présence d'une telle gorge permet d'améliorer le positionnement du harnais autour du plot, qui s'effectue de façon intuitive ;
- le plot présente globalement une forme de tête humaine. La forme de tête humaine est le moyen le plus intuitif de rangement du masque respiratoire.
- le plot est extensible entre un premier état dans lequel le plot maintien le harnais et un deuxième état dans lequel le plot libère le harnais, et le masque respiratoire est libérable par rapport au dispositif de rangement lorsque le plot est dans l'état rétracté;
- le plot présente une enveloppe gonflable ;
- la base présente un logement ;
- lorsque le masque respiratoire est en position de rangement et que le plot est en position escamotée, le plot et le masque respiratoire sont au moins en partie reçus dans le logement ;
- lorsque le masque respiratoire est en position de rangement et que le plot est en position escamotée, la majeure partie du plot est insérée dans le logement ;
- le harnais comprend un dispositif élastique tubulaire présentant une cavité interne, allongée et le dispositif élastique tubulaire est adapté pour s'allonger en fonction de la pression dans la cavité interne du dispositif élastique tubulaire, afin de permettre au membre d'équipage d'insérer sa tête dans la boucle formée par le harnais lorsque le harnais est dans l'état déployé;
- le plot est monté mobile en rotation sur la base entre la position escamotée et la position sortie;
- le plot pivote entre 45 et 135 degrés entre la position escamotée et la position sortie par rapport à la base ; autrement dit l'amplitude de rotation du plot par rapport à la base entre la position escamotée et la position sortie est comprise entre 45 et 135 degrés ;
- le plot tend à se déplacer vers la position sortie sous l'action de la gravité. Ainsi, aucun système particulier de déplacement n'est requis pour faire déplacer le plot vers la position de sortie ;
- le plot est retenu en position escamotée par un dispositif de retenue. Le dispositif permet ainsi de sécuriser la position escamotée du plot ;
- le dispositif de retenue du plot en position escamotée est un dispositif fonctionnant par attraction magnétique. Ce type de dispositif par attraction magnétique présente l'avantage d'être simple à mettre en oeuvre ;
- le dispositif fonctionnant par attraction magnétique comprend un aimant de rétention et un élément magnétique ou magnétisable, l'élément magnétique ou magnétisable étant à proximité immédiate de l'aimant de rétention en position escamotée, l'un parmi l'aimant de rétention et l'élément magnétique ou magnétisable étant lié à la base et l'autre parmi l'aimant de rétention et l'élément magnétique ou magnétisable étant lié au plot ;
- l'aimant de rétention est un électroaimant. L'utilisation d'un électroaimant permet de lier le déploiement du plot, et donc la sortie du masque respiratoire, à l'avionique de l'avion. Le signal de sortie du masque respiratoire est ainsi délivré de façon automatique, par exemple en cas de situation critique (dépression de la cabine ou détection de fumée par exemple). Une sortie automatique du masque respiratoire présente également l'avantage d'inciter l'utilisateur à saisir le masque respiratoire et donc à le porter le cas échéant.
- le dispositif de retenue comprend une butée, la butée maintenant le plot en position escamotée.
- L'invention concerne également un cockpit d'avion comprenant un siège et un ensemble destiné en particulier à être disposé dans un cockpit d'avion à cabine pressurisée pour fournir un gaz respiratoire à un membre d'équipage dans lequel l'ensemble est disposé sensiblement au-dessus du siège, mais décalé latéralement par rapport au siège entre 25 centimètres et 75 centimètres. Ce type de disposition permet une protection optimum du masque respiratoire. En effet, le masque respiratoire étant situé en hauteur, il est moins exposé aux divers facteurs de dégradation qu'il est possible de rencontrer, comme par exemple un versement de contaminant de type boisson ou encore une éventuelle casse.

L'invention concerne en outre un procédé de rangement d'un ensemble destiné en particulier à être disposé dans un cockpit d'avion à cabine pressurisée pour fournir un gaz respiratoire à un membre d'équipage, ledit ensemble comprenant un masque respiratoire et un dispositif de rangement, le masque respiratoire comprenant un harnais formant une boucle adaptée pour s'étendre autour de la tête de l'utilisateur, le dispositif de rangement comprenant une base et un plot, le plot étant monté mobile par rapport à la base entre une position escamotée et une position sortie, le procédé dans lequel :
a) on met le plot en position sortie,
b) on amène le masque respiratoire dans une position de rangement contre une surface de réception du plot en positionnant la boucle du harnais autour du plot, à l'opposé du couvre face oronasal,
c) on maintient le couvre face oronasal contre la surface de réception du plot en enserrant le plot avec le harnais, puis,
d) on fait passer le plot en position escamotée.

Dans divers modes de résiliation du procédé de rangement selon l'invention, on peut également avoir recours en outre à l'une et/ou à l'autre des étapes suivantes :
- le harnais est expansible et présente un état déployé et un état rétracté, et préalablement à l'étape c) on amène le harnais dans l'état déployé ;
- lors de l'étape c) on amène le harnais dans l'état rétracté;
- le plot est extensible entre un premier état dans lequel le plot maintient le harnais et un deuxième état dans lequel le plot libère le harnais, et préalablement à l'étape c) le plot est placé dans le deuxième état;
- lors de l'étape c) le plot est dans le premier état ;
- le plot s'étend suivant un axe longitudinal entre une extrémité de liaison et une extrémité libre, et est relié à la base au niveau de l'extrémité de liaison, et lors de l'étape b) on déplace le harnais par rapport au plot vers l'extrémité de liaison pour positionner la boucle du harnais autour du plot.

L'invention concerne par ailleurs un procédé d'utilisation d'un ensemble destiné en particulier à être disposé dans un cockpit d'avion à cabine pressurisée pour fournir un gaz respiratoire à un membre d'équipage, ledit ensemble comprenant un masque respiratoire et un dispositif de rangement, le masque respiratoire comprenant un harnais formant une boucle adaptée pour s'étendre autour de la tête de l'utilisateur, le dispositif de rangement comprenant une base et un plot, le plot étant monté mobile par rapport à la base entre une position escamotée et une position sortie, le procédé dans lequel :
a) le masque respiratoire étant dans une position de rangement contre une surface de réception du plot, la boucle du harnais s'étendant autour du plot, à l'opposé du couvre face oronasal, on déplace le plot de la position escamotée à la position sortie,
b) on maintient le couvre face oronasal contre la surface de réception du plot, puis
c) on libère le masque respiratoire par rapport au dispositif de rangement.

Dans divers modes de résiliation du procédé d'utilisation selon l'invention, on peut également avoir recours en outre à l'une et/ou à l'autre des étapes suivantes :
- le harnais est expansible et présente un état déployé et un état rétracté, et préalablement à l'étape a) on amène le harnais dans l'état rétracté;
- lors de l'étape c) on amène le harnais dans l'état déployé ;
- le plot est extensible entre un premier état dans lequel le plot maintien le harnais et un deuxième état dans lequel le plot libère le harnais, et préalablement à l'étape a) le plot est placé dans le deuxième état. ;
- lors de l'étape c) le plot est dans le premier état ;
- le plot s'étend suivant un axe longitudinal entre une extrémité de liaison et une extrémité libre, et est relié à la base au niveau de l'extrémité de liaison, et lors de l'étape c) on déplace le harnais par rapport au plot à l'opposé de l'extrémité de liaison pour libérer le masque respiratoire du plot.

Bien entendu les différentes caractéristiques, variantes et/ou formes de réalisation de la présente invention mentionnées ci-avant peuvent être associées les unes avec les autres selon diverses combinaisons dans la mesure où elles ne sont pas incompatibles ou exclusives les unes des autres.

### Brève description des figures

D'autres caractéristiques et avantages de la présente invention apparaîtrons dans la description détaillée suivante, se référant aux dessins annexés dans lesquels :
- la figure 1 est une vue d'ensemble d'un cockpit équipé de deux ensembles conforme à l'invention,
- la figure 2 est une vue en perspective selon un premier mode de réalisation d'un ensemble conforme à l'invention comprenant un masque respiratoire et un dispositif de rangement,
- la figure 3 est une vue en perspective de l'ensemble illustré à la figure 2, sous un angle différent,
- la figure 4 illustre à échelle agrandie un plot appartenant au dispositif de rangement, tel qu'illustré à la figure 2,
- la figure 5 illustre l'ensemble en plan, conforme à l'invention comprenant un masque respiratoire et un dispositif de rangement,
- la figure 6A illustre l'ensemble, selon le premier mode de réalisation conforme à l'invention,
- la figure 6B illustre l'ensemble, selon un deuxième mode de réalisation conforme à l'invention,
- les figures 7A, 7B, 7C et 7D illustrent 4 étapes de déplacement du dispositif de rangement entre une position escamotée et une position sortie,
- la figure 8 représente un ensemble selon un troisième mode de réalisation conforme à l'invention, le dispositif de rangement étant en position escamotée,
- la figure 9 représente l'ensemble selon le troisième mode de réalisation, le dispositif de rangement étant en position sortie,
- la figure 10 illustre en perspective l'ensemble selon un quatrième mode de réalisation, conforme à l'invention.

### Description détaillée de l'invention

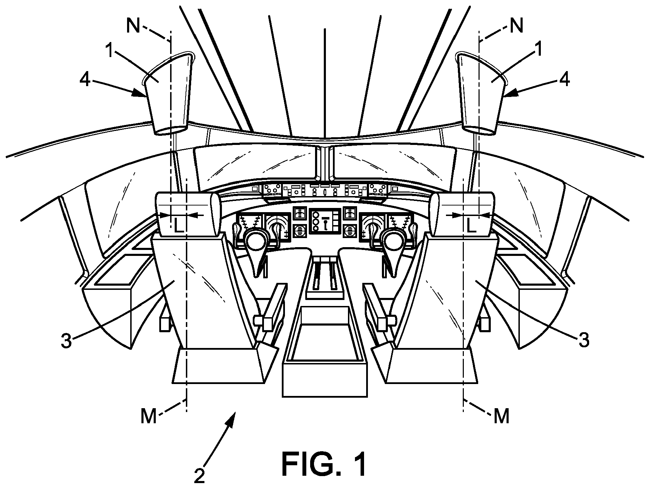

La figure 1 illustre une vue d'ensemble de plusieurs dispositifs de rangement 1 implantés dans un cockpit 2 de cabine pressurisée d'un avion. Plus précisément, la figure 1 illustre deux ensembles 4. Chaque ensemble 4 comprend un dispositif de rangement 1, chacun étant destiné à un pilote ou un copilote. Chaque dispositif de rangement 1 est positionné en hauteur par rapport à un siège 3. Plus précisément, chaque dispositif de rangement 1 est disposé sensiblement au-dessus du siège 3, mais décalé latéralement d'une distance L par rapport au siège. Chaque siège 3 est sensiblement symétrique par rapport à un premier plan médian M et chaque dispositif de rangement 1 est également sensiblement symétrique par rapport à un second plan médian N. La distance L correspond à la distance entre le plan médian M du siège 3 et le plan médian N du dispositif de rangement 1 correspondant. La distance latérale L entre le siège 3 et le dispositif de rangement 1 peut être comprise entre 25 centimètres et 75 centimètres. Comme illustré sur la figure 1, le dispositif de rangement 1 correspondant au siège de gauche est décalé latéralement de celui-ci vers la gauche à la distance L. De même, le dispositif de rangement 1 correspondant au siège de droite est décalé latéralement de celui-ci vers la droite à la distance L. Une telle disposition possède l'avantage de protéger le dispositif de rangement 1 vis-à-vis d'éventuelles dégradations pouvant survenir. Le dispositif de rangement 1 est ainsi protégé contre des projections de liquides par exemple.

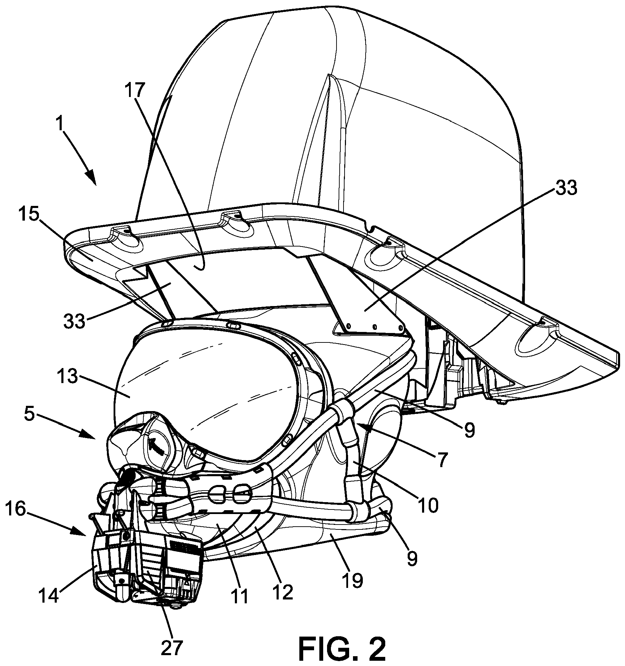

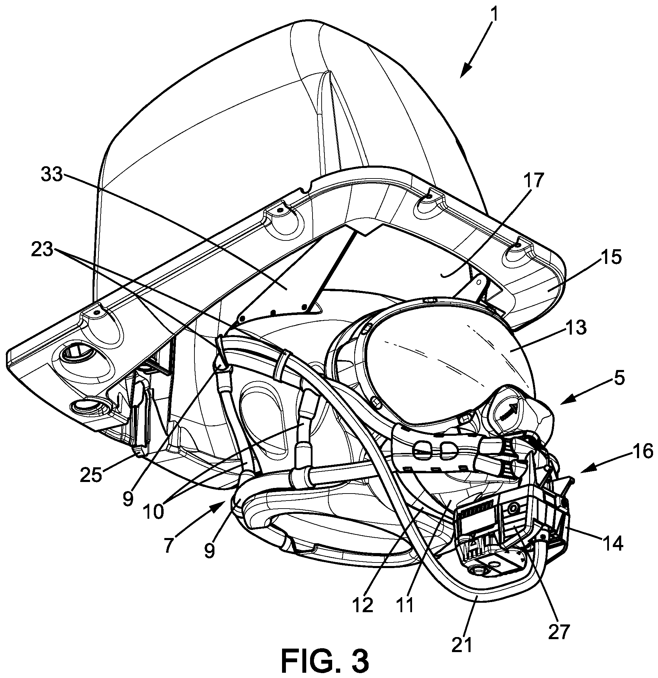

Le dispositif de rangement 1 comprend essentiellement un masque respiratoire 5, un plot 19, une base 15 et un logement 17. Comme illustré aux figures 2 et 3, le masque respiratoire 5 comprend essentiellement un couvre face oronasal 11 et un harnais 7. Le couvre face oronasal 11 présente un bord périphérique 12 délimitant une cavité respiratoire 8 dans laquelle l'utilisateur inspire et expire. Le bord périphérique 12 du couvre-face oronasal 11 est adapté pour s'appliquer sur le visage de l'utilisateur. Le masque respiratoire 5 comprend également un écran protection 13. L'écran de protection 13 permet de protéger les yeux de l'utilisateur contre les éventuelles projections, en particulier de la fumée. De plus, le masque respiratoire 5 comprend un support rigide 16. Dans le mode de réalisation illustré aux figures 2 et 3, le support rigide 16 sert de logement renfermant un régulateur 14. Le régulateur 14 permet de délivrer du gaz respiratoire à la demande. A cet effet, le régulateur 14 comprend, sur une de ses parties latérales, un levier 27. Le levier 27 sert ainsi de bouton de commande en fourniture de gaz respiratoire. Le masque respiratoire 5 est alimenté en gaz respiratoire par un tuyau d'alimentation 21. Comme l'illustre la figure 3, le tuyau d'alimentation 21 se prolonge depuis la zone du régulateur 14, jusque dans le logement 17, en hauteur du dispositif de rangement 1. Afin d'assurer la position du tuyau d'alimentation 21 le long du harnais 7, le tuyau d'alimentation 21 est maintenu sur le harnais 7. Il peut par exemple être maintenu par des colliers de serrage 23. Ce type de disposition en hauteur du tuyau d'alimentation 21 permet, lorsque le masque respiratoire 5 est porté par un utilisateur, de ne pas avoir de gêne à l'utilisation. Cela présente également l'avantage de diminuer le poids suspendu sous le support et tendant à tirer le menton de l'utilisateur vers le bas, par rapport au cas où le tuyau d'alimentation 21 est fixé au régulateur 14 et descend vers le dispositif de rangement 1 qui sera situé en avant de l'utilisateur.

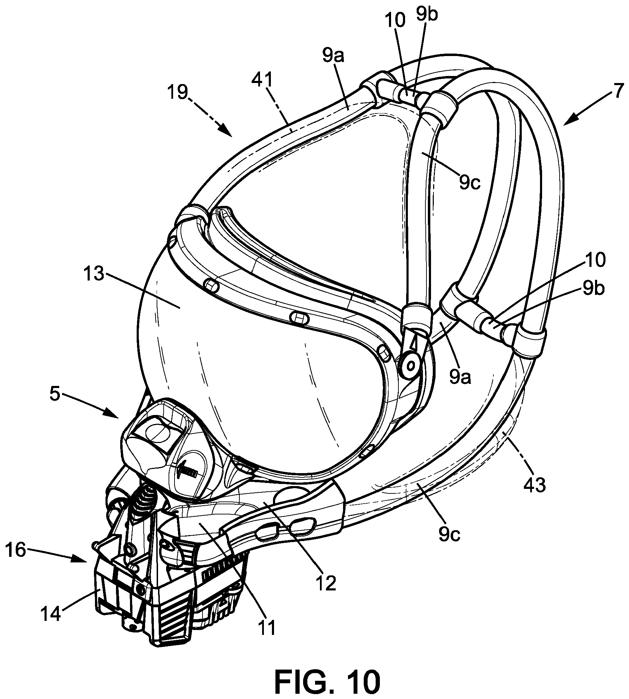

D'autre part, le harnais 7 comprend un dispositif élastique tubulaire. Le dispositif élastique tubulaire forme au moins une boucle 9 adaptée pour s'étendre autour de la tête d'un utilisateur, selon sa circonférence. Dans le mode de réalisation illustré aux figures 2 et 3, le harnais 7 forme deux boucles 9. Les deux boucles 9 sont maintenues espacées par des éléments d'espacement flexible 10. Les éléments flexibles 10 s'étendent transversalement entre les deux boucles 9. En d'autres termes, les éléments flexibles 10 s'étendent globalement à la verticale lorsque le masque respiratoire 5 est en condition d'utilisation. Il est également possible de prévoir, tel qu'illustré à la figure 10, un harnais dont chacune des deux boucles 9 est formée par une portion n'appartenant pas au dispositif élastique tubulaire. Plus précisément, chaque boucle 9 comprend une première portion 9a, une deuxième portion 9b et une troisième portion 9c. La portion 9b correspond à l'élément flexible 10, qui n'appartient pas au dispositif élastique tubulaire. En outre, dans ce mode de réalisation tel qu'illustré à la figure 10, les éléments flexibles 10 s'étendent horizontalement lorsque le masque respiratoire 5 est en condition d'utilisation. Selon un mode de réalisation, le harnais 7 est expansible. Il présente un état déployé et un état rétracté. Le dispositif élastique tubulaire est ainsi adapté pour s'allonger en fonction de la pression dans sa cavité interne, afin de permettre au membre d'équipage d'insérer sa tête dans les boucles formées par le harnais.

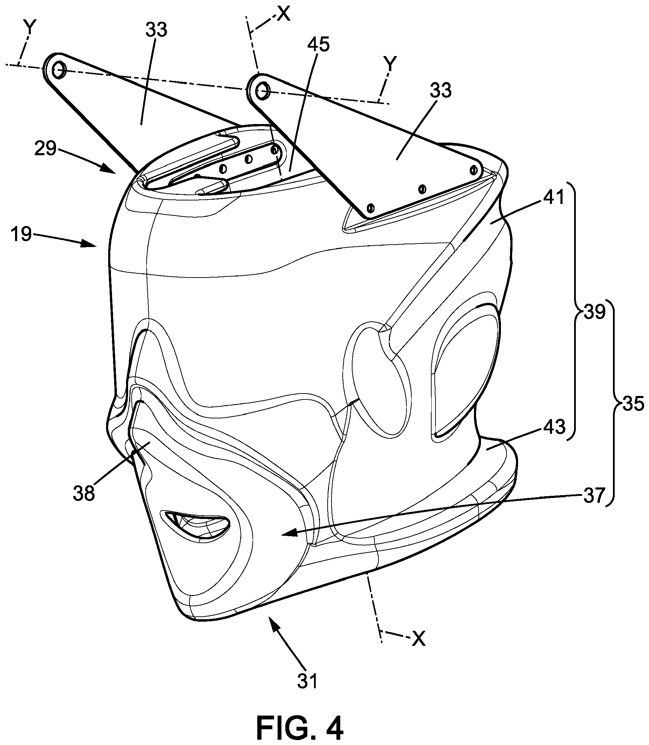

Par ailleurs, comme illustré sur la figure 2, le dispositif de rangement 1 comprend une base 15. La base 15 délimite un logement 17. Le dispositif de rangement 1 comprend en outre un plot 19. La figure 4 illustre de façon détaillée le plot 19. Sur cette figure, le plot est représenté isolé du reste du dispositif de rangement 1. Comme le montre la figure 4, le plot 19 est de forme cylindrique. D'une façon générale, la forme du plot 19 est celle d'une tête humaine. Cette forme a pour avantage d'être un moyen intuitif de rangement du masque respiratoire 5 sur le plot. Il s'étend le long d'un axe longitudinal X, entre une extrémité de liaison 29 et une extrémité libre 31. Le plot 19 est relié à la base 15 au niveau de l'extrémité de liaison 29. Le dispositif de rangement 1 comprend en outre deux pattes de liaison 33. Ces pattes de liaison 33 sont fixées au plot 19, à proximité de l'extrémité de liaison 29. Les pattes de liaison 33 sont disposées de part et d'autre du plot 19. Les pattes de liaison 33 sont montées mobiles en rotation autour d'un axe de rotation Y par rapport à la base 15. Ces pattes de liaison 33 permettent de connecter le plot 19 à la base 15. Le plot 19 est alors mobile en rotation sur la base 15 autour de l'axe de rotation Y, entre une position escamotée et une position sortie. L'axe de rotation Y est sensiblement perpendiculaire à l'axe longitudinal X et s'étend sensiblement parallèlement au plafond du cockpit. Le plot comprend en outre une surface de réception 35. La surface de réception 35 est prévue pour recevoir le masque respiratoire 5 lorsque celui-ci doit être rangé dans le dispositif de rangement 14. La surface de réception 35 est périphérique. Elle s'étend autour de l'axe longitudinal X. Tel qu'illustré à la figure 4, la surface de réception comprend une partie avant 37. La partie avant 37 est prévue pour recevoir le couvre-face oronasal 11 du masque respiratoire 5. Cette partie avant 37 comprend une saillie 38. La saillie 38 reprend ainsi globalement, du moins à sa base, la forme d'une bouche et d'un nez. Ainsi, le bord périphérique 12 du couvre face oronasal 11 est apte à coopérer avec la saillie 38 lorsque le masque respiratoire 5 est en position de rangement. En outre, la forme de la saillie 38 correspond étroitement à celle du bord périphérique 12. Par ailleurs, la surface de réception 35 présente une première gorge 41 et une deuxième gorge 43. Les première et deuxième gorges 41, 43 sont disposées périphériquement autour du plot 19. Les première et deuxième gorges 41, 43 sont opposées à la partie avant 37. La seconde gorge 43 est décalée par rapport à la première gorge 41 selon de la direction de l'axe longitudinal X. La première gorge 41 est disposée plus proche de l'extrémité de liaison 29 que la seconde gorge 43. La seconde gorge est ainsi plus proche de l'extrémité libre 31 que la première gorge 41. Les première et seconde gorges 41, 43 permettent de recevoir les boucles 9 du masque respiratoire 5. Chacune des boucles 9 sera alors reçue respectivement dans une des première et deuxième gorges 41, 43. Ces première et deuxième gorges 41, 43 améliorent ainsi le positionnement du harnais 7 autour du plot 19, et le maintiennent en position autour de ce plot 19. En outre, le plot 19 présente une cavité de stockage 45 du tuyau d'alimentation 21. La surface de stockage 45 est située au niveau supérieur du plot 19 selon l'axe longitudinal X. Plus précisément, la surface de stockage 45 est à proximité de l'extrémité de liaison 29. Cette surface de stockage 45 permet de recevoir le tuyau d'alimentation 21 lorsque le masque respiratoire 5 est rangé dans le dispositif de rangement 1.

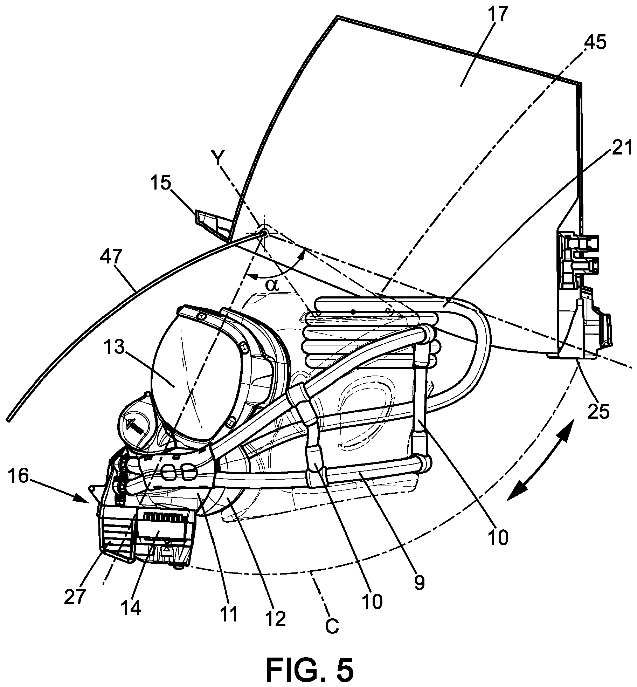

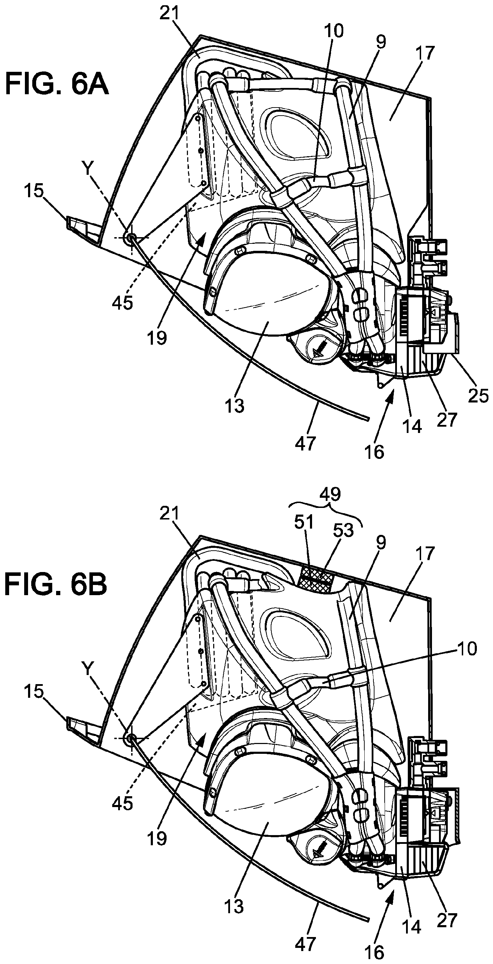

Ceci est illustré de façon plus détaillée à la figure 5. Sur cette figure, la cavité de stockage 45 reçoit le tuyau d'alimentation 21. Plus précisément, une partie du tuyau d'alimentation 21, c'est-à-dire une partie intermédiaire qui n'est pas fixée au harnais 7, est stockée dans cette cavité de stockage 45. Le stockage peut se faire notamment par enroulement du tuyau d'alimentation 21, comme illustré sur la figure 5. Ce type de stockage permet de diminuer l'encombrement du tuyau d'alimentation 21 lors du rangement du masque respiratoire 5. En outre, les figures 6A et 6B illustrent le masque respiratoire 5 positionné autour du plot 19, lorsque ceux-ci sont en position escamotée. L'ensemble composé du masque respiratoire 5 et du plot 19 passe de la position sortie, visible à la figure 5, à la position escamoté, visible à la figure 6A ou 6B et inversement par rotation sur la base 15 autour de l'axe de rotation Y, entre la position escamotée et la position sortie. Le mouvement de l'ensemble décrit alors un arc de cercle C. Selon ce mode de réalisation, le plot 19 pivote entre 45 et 135 degrés entre la position escamotée et la position sortie par rapport à la base 15. En d'autres termes, comme illustré à la figure 5, le plot 19 pivote par rapport à la base 15, entre la position escamotée et la position sortie selon an angle α compris entre 45 et 135 degrés. Plus précisément, dans le mode réalisation illustré, le plot 19 pivote d'environ 90 degrés par rapport à la base 15. Lorsque l'ensemble, composé du masque respiratoire 5 et du plot 19, est en position escamotée, la majeure partie du plot 19 est insérée dans le logement 17. Le masque respiratoire 5 est au moins en partie reçu dans le logement 17. La partie du masque respiratoire 5 comportant le régulateur 14 dépasse quant à elle du logement 17. Lorsque l'ensemble composé du masque respiratoire 5 et du plot 19 est en position escamotée, celui-ci a tendance, sous l'action de la gravité, à pivoter autour de l'axe de rotation Y et ainsi à passer en position sortie. Il est donc nécessaire de prévoir un dispositif de retenue 49 de l'ensemble en position escamotée. Sur la figure 6B, le dispositif de retenue 49 est un dispositif fonctionnant par attraction magnétique. Il comprend d'une part un élément magnétisable 51, et d'autre part un élément de rétention 53. L'élément magnétisable 51 et l'élément de rétention 53 sont à proximité immédiate l'un de l'autre en position escamotée. Dans ce mode de réalisation illustré à la figure 6B, l'élément magnétisable 51 est fixé au plot 19 alors que l'élément de rétention 53 est fixé au logement 17. Cependant, il est possible, dans un autre mode de réalisation, d'inverser les positions des deux éléments composant le dispositif de retenue 49 par attraction magnétique. Ainsi, l'élément de rétention 53 pourra être solidaire du plot 19 et l'élément magnétisable 51 solidaire du logement 17. Quelles que soient les positions de l'élément de rétention 53 et de l'élément magnétisable 51, il est avantageux de prévoir que l'élément de rétention 53 soit un électroaimant. Cet électroaimant peut ainsi être relié à l'avionique et commander la libération du plot 19 en fonction des conditions de navigation. Ainsi, le plot 19 peut passer en position sortie lors par exemple de la détection de fumée ou de dépression. Cette sortie automatique permet ainsi de rendre le masque respiratoire 5 aisément accessible à l'utilisateur afin que celui-ci puisse enfiler le masque respiratoire le plus rapidement possible en cas de situation critique (panne de pressurisation, dépressurisation, fumée...). Bien entendu, l'utilisateur peut également amener le plot 19 en position sortie, notamment en cas de préventif du masque respiratoire, soit en tirant sur le plot 19 pour vaincre la force de l'électroaimant, soit en utilisant un bouton commande manuelle (non représentée) ou analogue. Selon un autre mode de réalisation, l'élément de rétention 53 peut être un simple aimant. Il suffit ainsi à l'utilisateur de tirer sur l'ensemble pour faire sortir le plot 19 du logement 17. La force de retenue de l'aimant est alors dans ce cas conçue de façon à résister au poids de l'ensemble tendant à tomber sous l'effet de la gravité. Cependant, l'aimant cède sous la force émise par un utilisateur lorsque celui-ci tire sur l'ensemble. Selon encore un autre mode de réalisation, l'élément magnétisable 51 pourrait être remplacé par un aimant permanent, un électro-aimant, ou tout autre élément magnétique, ou encore un électro-aimant pourrait être magnétiquement couplé à l'élément magnétisable 51 pour créer un champ magnétique s'opposant au champ magnétique de l'aimant permanent formé par l'élément de rétention 53 pour libérer le plot.

En variante, le dispositif de retenue 49 pourrait être différent, l'élément de rétention 53 et l'élément magnétisable 51 pourraient être remplacés par un crochet et un rebord ou analogue apte à coopérer avec le crochet, formant alors butée mécanique, pour maintenir le plot 19 en position escamotée. Ainsi, un actionneur agissant sur le crochet pour le déplacer à l'écart du rebord serait de préférence relié à l'avionique afin de commander la libération du plot 19 en fonction des conditions de navigation.

La figure 6A illustre une autre variante de maintien de l'ensemble en position escamotée. Dans ce mode de réalisation, le maintien se fait en partie grâce à une butée 25. La butée 25, également visible à la figure 3, est conçue comme une pince de clippage. Le levier 27 du régulateur 14 vient ainsi se clipper dans cette butée 25. Par conséquent, le clippage entre le levier 27 et la butée 25 permet de maintenir le masque respiratoire 5 et le plot 19 en position escamotée. Pour de plus amples détails relatifs à la coopération entre la butée 25 et le levier 27, on pourra se référer à la demande de brevet WO2012/085616 A1.

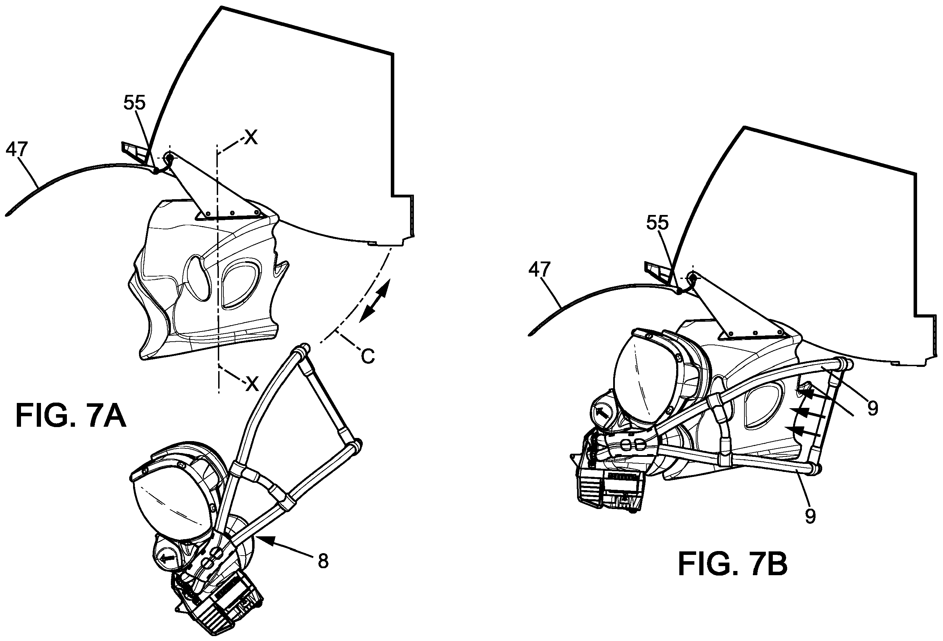

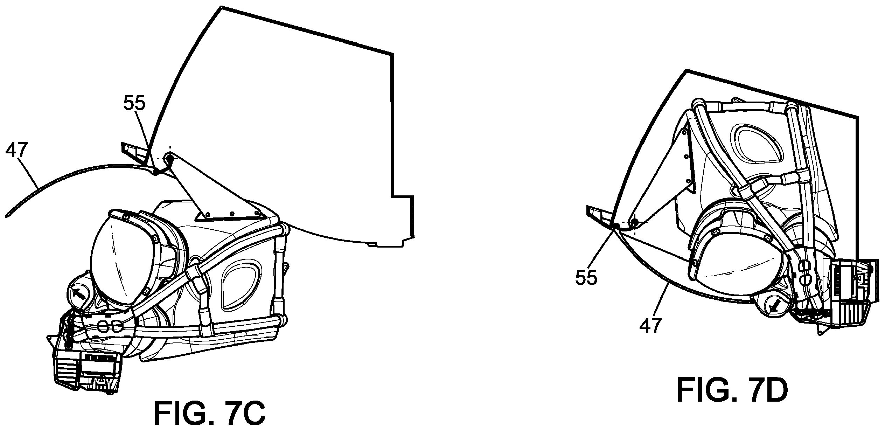

Le dispositif de rangement 1 peut comprendre en outre un battant 47, tel qu'illustré aux figures 5, 6A et 6B. Ce battant 47 a pour rôle de protéger le masque respiratoire 5 lorsque celui-ci est rangé dans le dispositif de rangement 1. Ce battant 47 est ainsi un protecteur de l'écran 13 du masque respiratoire 5. En variante, il est possible de prévoir un battant de plus grande taille obturant l'essentiel voire la totalité du logement 17. Le mouvement du battant 47 par rapport à la base 15 est piloté grâce à une biellette 55, visible aux figures 7A, 7B, 7C et 7D. Selon un autre mode de réalisation, le dispositif de rangement 1 comprend deux biellettes 55, chacune étant associée à une patte de fixation 33.

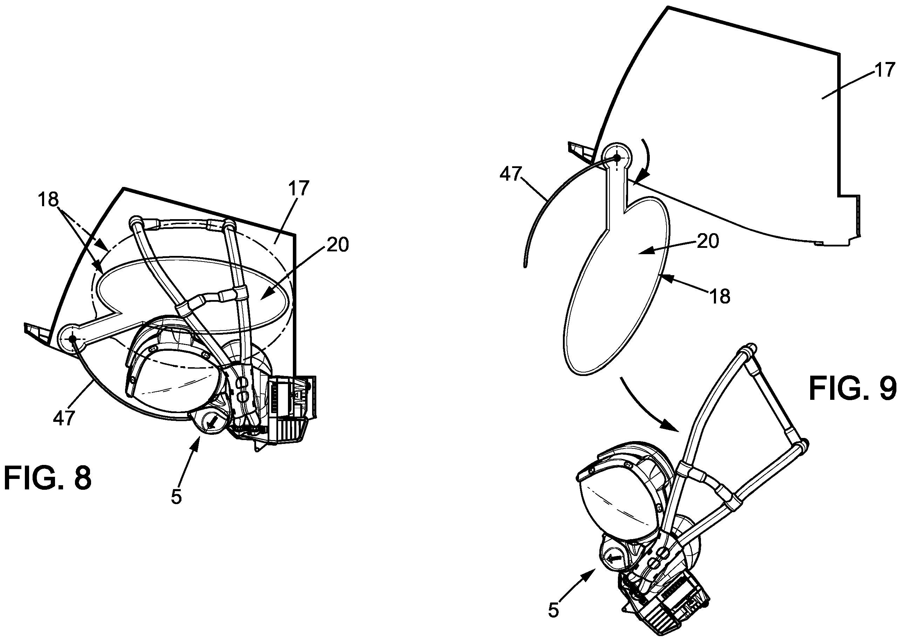

Selon un troisième mode de réalisation, le plot 19 est extensible. Dans le cas présent, le plot 19 peut être apparenté à un ballon gonflable ou dégonflable selon l'action de rangement envisagée. Tel qu'illustré aux figures 8 et 9, le plot 19 comprend une enveloppe 18 et une âme rigide 20. L'enveloppe 18 est gonflable. Le masque respiratoire 5 est ainsi maintenu dans le dispositif de rangement 1 par son harnais 7, uniquement par l'âme rigide 21. D'une façon générale, l'avantage d'un tel support extensible est de diminuer l'épaisseur globale du plot 19 et de diminuer ainsi l'encombrement du dispositif de rangement 1.

Les procédés de rangement et d'utilisation du dispositif de rangement 1 selon l'invention vont à présent être décrits en référence aux figures 7A, 7B, 7C et 7D. Lorsque l'utilisateur saisit le masque respiratoire 5 par le support rigide 16, il actionne le levier 27 permettant au harnais 7 de se gonfler. Le harnais 7 passe alors de sa configuration rétractée à sa configuration déployée. Dans cette configuration, la longueur totale du harnais 7 est ainsi supérieure à sa longueur au repos. Ainsi, les boucles 9, formées par le harnais 7 et prévues pour le passage de la tête d'un utilisateur, sont plus grandes que celles formées au repos. Le masque respiratoire 5 est ensuite mis en position autour du plot 19 (figure 7A). Pour cela, le harnais 7 est passé autour du plot 19 par son extrémité libre 31. Le passage du harnais 7 autour du plot 19 est grandement facilité par les dimensions du harnais 7, qui à cette étape, est déployé. Une fois le masque respiratoire mis en place autour du plot 19, le harnais est rétracté (figure 7B). Lors de cette étape, l'utilisateur relâche la pression exercée sur le levier 17, ce qui permet au harnais 7 de se rétracter. Lors de cette étape, le couvre-face oronasal 11 est positionné contre la partie avant 37 de la surface de réception 35. Le dégonflage du harnais 7 va ainsi permettre au harnais 7 de se rétracter autour du plot 19. Le harnais 7 va ainsi enserrer le plot 19. Les première et deuxième gorges 41, 43 servent de guide au harnais 7 lorsque celui-ci se rétracte. Une fois le harnais 7 complètement rétracté (figure 7C), celui-ci est positionné autour du plot 19, en prenant appui dans les première et deuxième gorges 41, 43. La présence de ces première et deuxième gorges 41, 43, servant de guide lorsque le harnais 7 se rétracte, permet de toujours venir se placer dans la même zone. Cependant, de telles gorges 41, 43 ne sont pas indispensables à l'invention. Il est en effet tout à fait possible de mettre en place le masque respiratoire 5 autour du plot 19, sans que le harnais ne prenne appui dans des gorges 41, 43. Dans ce cas, le harnais 7 tient autour du plot par la pression exercée entre le bord périphérique du couvre face oronasal et la saillie 38. Ensuite, l'utilisateur pousse sur l'ensemble comportant le plot 19 et le masque respiratoire 5. Le plot 19 pivote ainsi autour de son axe de pivotement Y. Au final, le plot 19 et le masque respiratoire 5 sont reçus dans le logement 17. La position escamotée de l'ensemble est retenue grâce au dispositif de retenue 49, 25. Le battant 47 suit le mouvement du plot 19. Dans la position escamotée, le battant est par conséquent à proximité du masque respiratoire 5. Le battant 47 permet ainsi de protéger le masque respiratoire 5.

Inversement, lorsque les conditions environnantes le nécessitent, le plot 19 est libéré du dispositif de retenue 49. Du fait de la gravité, le plot 19 tombe en pivotant autour de son axe de rotation Y. Le battant 47 est entrainé par le mouvement du plot 19. Lorsque le plot 19 pivote en position sortie, le battant 47 s'en éloigne. Dans une seconde étape, le masque respiratoire 5 est retiré du plot 19. Pour ôter le masque respiratoire 5 du plot 19, le harnais 7 est d'abord gonflé. Il est ainsi en position déployé. Puis l'utilisateur tire sur le masque respiratoire 5, dans un mouvement partant de l'extrémité libre 31 du plot 19 dans le sens l'opposé de l'extrémité 29. Ce mouvement se fait ainsi sensiblement selon l'axe longitudinal X. Le masque respiratoire 5 est ainsi libéré du plot 19. L'utilisateur peut ainsi faire remonter le plot 19, en le poussant, dans le logement 17. Le plot 19 et le masque respiratoire 5 étant deux éléments indépendants, il est possible de mettre le plot 19 en position escamotée alors que celui-ci n'est pas enserré par le masque respiratoire 5.

Selon le troisième mode de réalisation (figures 8 et 9), lorsque le masque respiratoire 5 est en place autour du plot 19, le plot 19 est dans un premier état dans lequel le plot 19 maintient le harnais 7, comme cela est visible en trait mixte (parfois dénommé trait fantôme) sur la figure 8. Inversement, lorsque le masque respiratoire 5 doit être enlevé ou mis en place autour du plot, le plot 19 est dans un deuxième état rétracté dans lequel le plot 19 libère le harnais 7 (en trait continu sur les figures 8 et 9). Le premier état du plot pourrait ainsi être assimilé au plot étant gonflé et le deuxième état pourrait de même être assimilé au plot étant dégonflé.

Selon une variante non représentée se différenciant essentiellement du mode de réalisation illustré aux figures 8 et 9, le plot pourrait comprendre au moins deux parties mobiles au lieu de comprendre un ballon gonflable. Dans l'état expansé, les parties mobiles s'écarteraient les unes des autres. Dans l'état rétracté, les parties mobiles seraient rapprochées les unes des autres.

Bien entendu, l'invention n'est nullement limitée aux modes de réalisations illustrés à titre indicatif et non limitatifs. Ainsi, même si ce n'est pas préféré, le plot pourrait être mobile par rapport à la base en translation. En outre, l'axe de rotation Y pourrait être mobile en translation par rapport à la base 15.

En outre, dans les modes de réalisation illustrés, le masque respiratoire 5 comprend un écran de protection 13 et un couvre face oronasal 11 distinct du couvre face oronasal 11, l'écran de protection 13 étant en particulier libérable par rapport au couvre face oronasal 11. En variante, l'écran de protection 13 pourrait être fixe par rapport au couvre face oronasal 11. Selon une autre variante, l'écran de protection 13 pourrait être intégré au couvre face oronasal 11, formant un masque usuellement dénommé "full face", la cavité respiratoire 8 dans laquelle inspire et expire l'utilisateur s'étendant également autour des yeux de l'utilisateur.

Par ailleurs, le plot 19 pourrait avoir une autre forme que celle illustrée, notamment une forme sensiblement sphérique.

## Revendications

1. Ensemble (4) destiné en particulier à être disposé dans un cockpit d'avion (2) à cabine pressurisée pour fournir un gaz respiratoire à un membre d'équipage, ledit ensemble (4) comprenant :
- un masque respiratoire (5) comportant un couvre face oronasal (11) et un harnais (7), le couvre face oronasal (11) présentant une cavité respiratoire (8) et étant adapté pour s'appliquer sur le visage du membre d'équipage autour de la bouche et du nez, le harnais (7) forme une boucle (9) adaptée pour s'étendre autour de la tête de l'utilisateur à l'opposé du couvre face oronasal (11) afin de maintenir le couvre face oronasal (11) sur le visage de l'utilisateur, et
- un dispositif de rangement (1), ledit dispositif de rangement (1) comprenant une base (15) et un plot (19),
**caractérisé en ce que** le plot (19) est monté mobile par rapport à la base (15) entre une position escamotée et une position sortie, le plot (19) présente une surface de réception (35), la surface de réception (35) du plot (19) est adaptée pour recevoir le masque respiratoire (5) dans une position de rangement dans laquelle le harnais (7) maintient le couvre face oronasal (11) contre la surface de réception (35) du plot (19) en enserrant le plot (19) en formant une boucle (9) s'étendant autour du plot (19), à l'opposé du couvre face oronasal (11), le masque respiratoire (5) étant libérable par rapport au dispositif de rangement (1).

2. Ensemble (4) selon la revendication 1 dans lequel
- la surface de réception (35) est périphérique,
- le harnais (7) est expansible, le harnais (7) présente un état déployé et un état rétracté,
- le harnais (7) forme une boucle (9) adaptée pour s'étendre autour de la tête de l'utilisateur à l'opposé du couvre face oronasal (11) afin de maintenir le couvre face oronasal (11) sur le visage de l'utilisateur, lorsque le harnais (7) est dans l'état rétracté, et
- dans la position de rangement, le harnais (7) est dans l'état rétracté.

3. Ensemble (4) selon la revendication 2 dans lequel :
- le plot (19) s'étend suivant un axe longitudinal (X) entre une extrémité de liaison (29) et une extrémité libre (31), et est relié à la base (15) au niveau de l'extrémité de liaison (29), la surface de réception (35) s'étend autour de l'axe longitudinal (X) et le plot (19) présente de préférence globalement une forme cylindrique s'étendant autour de l'axe longitudinal (X), et
- le masque respiratoire (5) est libérable par rapport au dispositif de rangement (1) lorsque le harnais (7) est dans l'état déployé par déplacement par rapport au plot (19) à l'opposé de l'extrémité de liaison (29).

4. Ensemble (4) selon l'une quelconque des revendications précédentes dans lequel le plot (19) est extensible entre un premier état dans lequel le plot (19) maintient le harnais (7) et un deuxième état dans lequel le plot (19) libère le harnais (7), et le masque respiratoire (5) est libérable par rapport au dispositif de rangement (1) lorsque le plot (19) est dans l'état rétracté, de préférence le plot (19) présente une enveloppe (18) gonflable.

5. Ensemble (4) selon l'une quelconque des revendications précédentes dans lequel :
- la base (15) présente un logement (17), et
- lorsque le masque respiratoire (5) est en position de rangement et que le plot (19) est en position escamotée, le plot (19) et le masque respiratoire (5) sont au moins en partie reçus dans le logement (17), de préférence la majeure partie du plot (19) est insérée dans le logement (17).

6. Ensemble (4) selon la revendication 1 dans lequel le couvre face oronasal (11) présente un bord périphérique (12) et la surface de réception (35) du plot présente une saillie (38) et dans lequel le bord périphérique (12) du couvre face oronasal (11) est apte à coopérer avec la saillie (38) de la surface de réception (35) lorsque le masque respiratoire (5) est en position de rangement.

7. Ensemble (4) selon l'une quelconque des revendications précédentes dans lequel le harnais (7) comprend un dispositif élastique tubulaire présentant une cavité interne, allongée et le dispositif élastique tubulaire est adapté pour s'allonger en fonction de la pression dans la cavité interne du dispositif élastique tubulaire, afin de permettre au membre d'équipage d'insérer sa tête dans la boucle (9) formée par le harnais (7) lorsque le harnais (7) est dans l'état déployé.

8. Ensemble (4) selon l'une quelconque des revendications précédentes dans lequel le plot (19) est monté mobile en rotation sur la base (15) entre la position escamotée et la position sortie, de préférence le plot pivote entre 45 et 135 degrés entre la position escamotée et la position sortie par rapport à la base (15).

9. Ensemble (4) selon l'une quelconque des revendications précédentes dans lequel le plot (19) est retenu en position escamotée par un dispositif de retenue (49), et de préférence le dispositif de retenue (49) du plot en position escamotée est un dispositif fonctionnant par attraction magnétique.

10. Cockpit d'avion (2) comprenant un siège (3) et un ensemble (4) selon l'une quelconque des revendications précédentes dans lequel l'ensemble (4) est disposé sensiblement au-dessus du siège, mais décalé latéralement par rapport au siège entre 25 centimètres et 75 centimètres.

11. Procédé de rangement d'un ensemble (4) destiné en particulier à être disposé dans un cockpit (2) d'avion à cabine pressurisée pour fournir un gaz respiratoire à un membre d'équipage, ledit ensemble (4) comprenant un masque respiratoire (5) et un dispositif de rangement (1), le masque respiratoire (5) comprenant un harnais (7) formant une boucle (9) adaptée pour s'étendre autour de la tête de l'utilisateur, le dispositif de rangement (1) comprenant une base (15) et un plot (19),
**caractérisé en ce que** le plot (19) est monté mobile par rapport à la base (15) entre une position escamotée et une position sortie et **en ce que** :
a) on met le plot (19) en position sortie,
b) on amène le masque respiratoire (5) dans une position de rangement contre une surface de réception (35) du plot en positionnant la boucle (9) du harnais (7) autour du plot (19), à l'opposé du couvre face oronasal (11),
c) on maintient le couvre face oronasal (11) contre la surface de réception (35) du plot (19) en enserrant le plot (19) avec le harnais (7), puis,
d) on fait passer le plot (19) en position escamotée.

12. Procédé de rangement selon la revendication précédente dans lequel le plot (19) est extensible entre un premier état dans lequel le plot (19) maintien le harnais (7) et un deuxième état dans lequel le plot (19) libère le harnais (7), préalablement à l'étape c) le plot (19) est placé dans le deuxième état, et de préférence lors de l'étape c) le plot (19) est dans le premier état.

13. Procédé de rangement selon l'une quelconque des revendications 11 et 12 dans lequel le plot (19) s'étend suivant un axe longitudinal (X) entre une extrémité de liaison (29) et une extrémité libre (31), et est relié à la base (15) au niveau de l'extrémité de liaison (29), et lors de l'étape b) on déplace le harnais (7) par rapport au plot (19) vers l'extrémité de liaison (29) pour positionner la boucle (9) du harnais (7) autour du plot (19).

14. Procédé d'utilisation d'un ensemble (4) destiné en particulier à être disposé dans un cockpit (2) d'avion à cabine pressurisée pour fournir un gaz respiratoire à un membre d'équipage, ledit ensemble (4) comprenant un masque respiratoire (5) et un dispositif de rangement (1), le masque respiratoire (5) comprenant un harnais (7) formant une boucle (9) adaptée pour s'étendre autour de la tête de l'utilisateur, le dispositif de rangement (1) comprenant une base (15) et un plot (19),
**caractérisé en ce que** le plot (19) est monté mobile par rapport à la base (15) entre une position escamotée et une position sortie et **en ce que** :
a) le masque respiratoire (5) étant dans une position de rangement contre une surface de réception (35) du plot (19), la boucle (9) du harnais s'étendant autour du plot (19), à l'opposé du couvre face oronasal (11), on déplace le plot (19) de la position escamotée à la position sortie,
b) on maintient le couvre face oronasal (11) contre la surface de réception du plot (35), puis
c) on libère le masque respiratoire (5) par rapport au dispositif de rangement (1).

15. Procédé d'utilisation selon la revendication précédente dans lequel le plot (19) s'étend suivant un axe longitudinal (X) entre une extrémité de liaison (29) et une extrémité libre (31), et est relié à la base (15) au niveau de l'extrémité de liaison (29), et lors de l'étape c) on déplace le harnais (7) par rapport au plot (19) à l'opposé de l'extrémité de liaison (29) pour libérer le masque respiratoire (5) du plot (19).

## Patentansprüche

1. Anordnung (4), welche insbesondere dazu vorgesehen ist, in einem Flugzeugcockpit (2) mit Druckkabine angeordnet zu sein, um ein Atemgas an ein Besatzungsmitglied zu liefern, wobei die Anordnung (4) umfasst:
- eine Atemmaske (5), welche eine oronasale Gesichtsbedeckung (11) und ein Gurtzeug (7) umfasst, wobei die oronasale Gesichtsbedeckung (11) einen Atemhohlraum (8) aufweist und dazu eingerichtet ist, sich an das Gesicht des Besatzungsmitglieds um den Mund und die Nase herum anzulegen, wobei das Gurtzeug (7) eine Schleife (9) bildet, welche dazu eingerichtet ist, sich um den Kopf des Benutzers gegenüber der oronasalen Gesichtsbedeckung (11) herum zu erstrecken, um die oronasale Gesichtsbedeckung (11) an dem Gesicht des Benutzers zu halten, und
- eine Ablagevorrichtung (1), wobei die Ablagevorrichtung (1) eine Basis (15) und eine Auflage (19) umfasst,
**dadurch gekennzeichnet, dass** die Auflage (19) gegenüber der Basis (15) zwischen einer eingefahrenen Position und einer ausgefahrenen Position bewegbar ist, wobei die Auflage (19) eine Aufnahmefläche (35) aufweist, wobei die Aufnahmefläche (35) der Auflage (19) dazu eingerichtet ist, die Atemmaske (5) in einer Ablageposition aufzunehmen, in welcher das Gurtzeug (7) die oronasale Gesichtsbedeckung (11) gegen die Aufnahmefläche (35) der Auflage (19) hält, indem die Auflage (19) umspannt wird, indem eine Schleife (9) gebildet wird, welche sich um die Auflage (19) gegenüber der oronasalen Gesichtsbedeckung (11) erstreckt, wobei die Atemmaske (5) bezüglich der Ablagevorrichtung (1) freigebbar ist.

2. Anordnung (4) nach Anspruch 1, wobei:
- die Aufnahmefläche (35) umfänglich ist,
- das Gurtzeug (7) ausdehnbar ist, wobei das Gurtzeug (7) einen ausgebreiteten Zustand und einen eingezogenen Zustand aufweist,
- wobei das Gurtzeug (7) eine Schleife (9) bildet, welche dazu eingerichtet ist, sich um den Kopf des Benutzers herum gegenüber der oronasalen Gesichtsbedeckung (11) zu erstrecken, um die oronasale Gesichtsbedeckung (11) an dem Gesicht des Benutzers zu halten, wenn das Gurtzeug (7) in dem eingezogenen Zustand ist, und
- in der Ablageposition das Gurtzeug (7) in dem eingezogenen Zustand ist.

3. Anordnung (4) nach Anspruch 2, wobei:
- sich die Auflage (19) einer longitudinalen Achse (X) folgend zwischen einem Verbindungsende (29) und einem freien Ende (31) erstreckt und an der Basis (15) auf dem Niveau des Verbindungsendes (19) angebracht ist, wobei sich die Aufnahmefläche (35) um die longitudinale Achse (X) herum erstreckt und die Auflage (19) vorzugsweise im Ganzen eine zylindrische Form aufweist, welche sich um die longitudinale Achse (X) herum erstreckt, und
- die Atemmaske (5) bezüglich der Ablagevorrichtung (1) freigebbar ist, wenn das Gurtzeug (7) in dem ausgebreiteten Zustand ist, durch Verlagern gegenüber der Auflage (19) gegenüber dem Verbindungsende (29).

4. Anordnung (4) nach einem der vorhergehenden Ansprüche, wobei die Auflage (19) zwischen einem ersten Zustand, in welchem die Auflage (19) das Gurtzeug (7) hält, und einem zweiten Zustand ausfahrbar ist, in welchem die Auflage (19) das Gurtzeug (7) freigibt, und die Atemmaske bezüglich der Ablagevorrichtung (1) freigebbar ist, wenn die Auflage (19) in dem eingezogenen Zustand ist, wobei die Auflage (19) vorzugsweise eine aufblasbare Hülle (18) aufweist.

5. Anordnung (4) nach einem der vorhergehenden Ansprüche, wobei:
- die Basis (15) einen Sitz (17) aufweist, und
- wenn die Atemmaske (5) in Ablageposition ist und wenn die Auflage (19) in eingefahrener Position ist, die Auflage (19) und die Atemmaske (5) wenigstens teilweise in dem Sitz (17) aufgenommen sind, wobei vorzugsweise der überwiegende Teil der Auflage (19) in den Sitz (17) eingeführt ist.

6. Anordnung (4) nach Anspruch 1, wobei die oronasale Gesichtsbedeckung (11) einen Umfangsrand (12) aufweist und die Aufnahmefläche (35) der Auflage einen Vorsprung (38) aufweist, und wobei der Umfangsrand (12) der oronasalen Gesichtsbedeckung (11) dazu in der Lage ist, mit dem Vorsprung (38) der Aufnahmefläche (35) zusammenzuwirken, wenn die Atemmaske (5) in Ablageposition ist.

7. Vorrichtung (4) nach einem der vorhergehenden Ansprüche, wobei das Gurtzeug (7) eine rohrförmige elastische Vorrichtung umfasst, welche einen länglichen inneren Hohlraum aufweist, und die rohrförmige elastische Vorrichtung dazu eingerichtet ist, sich als Funktion des Drucks in dem inneren Hohlraum der rohrförmigen elastischen Vorrichtung zu verlängern, um dem Besatzungsmitglied zu erlauben, seinen Kopf in die Schleife (9) einzusetzen, welche durch das Gurtzeug (7) gebildet ist, wenn das Gurtzeug (7) in seinem ausgebreiteten Zustand ist.

8. Anordnung (4) nach einem der vorhergehenden Ansprüche, wobei die Auflage (19) an der Basis (15) in Rotation zwischen der eingefahrenen Position und der ausgefahrenen Position beweglich montiert ist, wobei die Auflage vorzugsweise zwischen 45 und 135 Grad zwischen der eingefahrenen Position und der ausgefahrenen Position bezüglich der Basis (15) schwenkt.

9. Anordnung (4) nach einem der vorhergehenden Ansprüche, wobei die Auflage (19) in eingefahrener Position durch ein Rückhaltemittel (49) zurückgehalten wird, und wobei vorzugsweise das Rückhaltemittel (49) der Auflage in eingefahrener Position eine Vorrichtung ist, welche durch magnetische Anziehung funktioniert.

10. Flugzeugcockpit (2), umfassend einen Sitz (3) und eine Anordnung (4) nach einem der vorhergehenden Ansprüche, wobei die Anordnung (4) im Wesentlichen oberhalb des Sitzes angeordnet ist, jedoch lateral gegenüber dem Sitz um zwischen 25 Zentimeter und 75 Zentimeter versetzt ist.

11. Verfahren zum Ablegen einer Anordnung (4), welche insbesondere dazu vorgesehen ist, in einem Flugzeugcockpit (2) mit Druckkabine angeordnet zu sein, um ein Atemgas zu einem Besatzungsmitglied zu liefern, wobei die Anordnung (4) eine Atemmaske (5) und eine Ablagevorrichtung (1) umfasst, wobei die Atemmaske (5) ein Gurtzeug (7) umfasst, welches eine Schleife (9) bildet, welche dazu eingerichtet ist, sich um den Kopf des Benutzers herum zu erstrecken, wobei die Ablagevorrichtung (1) eine Basis (15) und eine Auflage (19) umfasst,
**dadurch gekennzeichnet, dass** die Auflage (19) beweglich bezüglich der Basis (15) zwischen einer eingefahrenen Position und einer ausgefahrenen Position montiert ist, und dass:
a) die Auflage (19) in die ausgefahrene Position versetzt wird,
b) die Atemmaske (5) in eine Ablageposition gegen eine Aufnahmefläche (35) der Auflage gebracht wird, indem die Schleife (9) des Gurtzeugs (7) um die Auflage (19) herum gegenüber der oronasalen Gesichtsbedeckung (11) positioniert wird,
c) die oronasale Gesichtsbedeckung (11) gegen die Aufnahmefläche (35) der Auflage (19) gehalten wird, indem die Auflage (19) mit dem Gurtzeug (7) umspannt wird, und dann
d) die Auflage (19) in die eingefahrene Position geführt wird.

12. Verfahren zum Ablegen nach dem vorhergehenden Anspruch, wobei die Auflage (19) zwischen einem ersten Zustand, in welchem die Auflage (19) das Gurtzeug (7) hält, und einem zweiten Zustand ausfahrbar ist, in welchem die Auflage (19) das Gurtzeug (7) freigibt, wobei vor dem Schritt c) die Auflage (19) in dem zweiten Zustand platziert wird, wobei vorzugsweise während des Schritts c) die Auflage (19) in dem ersten Zustand ist.

13. Verfahren zum Ablagen nach einem der Ansprüche 11 und 12, wobei sich die Auflage (19) einer longitudinalen Achse (X) folgend zwischen einem Verbindungsende (29) und einem freien Ende (31) erstreckt und mit der Basis (15) auf dem Niveau des Verbindungsendes (29) gekoppelt ist, und wobei während Schritt b) das Gurtzeug (7) bezüglich der Auflage (19) in Richtung des Verbindungsendes (29) verlagert wird, um die Schleife (9) des Gurtzeugs (7) um die Auflage (19) herum zu positionieren.

14. Verfahren zur Verwendung einer Anordnung (4), welche insbesondere dazu vorgesehen ist, in einem Flugzeugcockpit (2) mit Druckkabine angeordnet zu sein, um ein Atemgas zu einem Besatzungsmitglied zu liefern, wobei die Anordnung (4) eine Atemmaske (5) und eine Ablagevorrichtung (1) umfasst, wobei die Atemmaske (5) ein Gurtzeug (7) umfasst, welches eine Schleife (9) bildet, welche dazu eingerichtet ist, sich um den Kopf des Benutzers herum zu erstrecken, wobei die Ablagevorrichtung (1) eine Basis (15) und eine Auflage (19) umfasst,
**dadurch gekennzeichnet, dass** die Auflage (19) bezüglich der Basis (15) bewegbar zwischen einer eingefahrenen Position und einer ausgefahrenen Position montiert ist, und dass:
a) die Atemmaske (5) in einer Ablageposition gegen eine Aufnahmefläche (35) der Auflage (19) ist, sich die Schleife (9) des Gurtzeugs um die Auflage (19) gegenüber der oronasalen Gesichtsbedeckung (11) herum erstreckt, die Auflage (19) von der eingefahrenen Position in die ausgefahrene Position verlagert wird,
b) die oronasale Gesichtsbedeckung (11) gegen die Aufnahmefläche der Auflage (35) gehalten wird, und dann
c) die Atemmaske (5) bezüglich der Ablagevorrichtung (1) freigegeben wird.

15. Verfahren zur Verwendung nach dem vorhergehenden Anspruch, wobei sich die Auflage (19) einer longitudinalen Achse (X) folgend zwischen einem Verbindungsende (29) und einem freien Ende (31) erstreckt und an der Basis (15) auf dem Niveau des Verbindungsendes (29) angebracht ist, und während Schritt c) das Gurtzeug (7) bezüglich der Auflage (19) gegenüber dem Verbindungsende (29) verlagert wird, um die Atemmaske (5) von der Auflage (19) freizugeben.

## Claims

1. Assembly (4) intended in particular to be arranged in a cockpit (2) of an aircraft having a pressurized cabin in order to supply a breathing gas to a crew member, said assembly (4) comprising:
- a respiratory mask (5) having an oronasal face cover (11) and a harness (7), the oronasal face cover (11) having a respiratory cavity (8) and being suitable for applying on the face of crew member around the mouth and nose, the harness (7) forming a loop (9) adapted to be extended around the head of the user on a side opposite from the oronasal face cover (11) so as to hold the oronasal face cover (11) on the face of the user, and
- a storage device (1), said storage device (1) comprising a base (15) and a platform (19),
**characterized in that** the platform (19) being mounted so as to be movable relative to the base (15) between a retracted position and an extended position, the platform (19) having a receiving surface (35), the receiving surface (35) of the platform (19) being adapted to receive the respiratory mask (5) in a storage position where the harness (7) holds the oronasal face cover (11) against the receiving surface (35) of the platform (19) by encircling the platform (19) to form a loop (9) extending around the platform (19) on the opposite side from the oronasal face cover (11), the respiratory mask (5) being releasable from the storage device (1).

2. Assembly (4) according to claim 1, wherein
- the receiving surface (35) is peripheral,
- the harness (7) is expandable, the harness (7) having a deployed state and a retracted state,
- the harness (7) forms a loop (9) adapted to be extended around the head of the user on the opposite side from the oronasal face cover (11) so as to hold the oronasal face cover (11) on the face of the user when the harness (7) is in the retracted state, and
- in the storage position, the harness (7) is in the retracted state.

3. Assembly (4) according to claim 2, wherein:
- the platform (19) extends along a longitudinal axis (X) between a connecting end (29) and a free end (31), and is connected to the base (15) at the connecting end (29), the receiving surface (35) extending around the longitudinal axis (X) and the platform (19) has a generally cylindrical shape extending around the longitudinal axis (X), and
- the respiratory mask (5) is releasable from the storage device (1) when the harness (7) is in the deployed state, by movement away from the platform (19) on the side opposite from the connecting end (29).

4. Assembly (4) according to any one of the preceding claims, wherein the platform (19) is extendable between a first state where the platform (19) is holding the harness (7) and a second state where the platform (19) releases the harness (7), and the respiratory mask (5) is releasable from the storage device (1) when the platform (19) is in the retracted state, preferably the platform (19) has an inflatable casing (18).

5. Assembly (4) according to any one of the preceding claims, wherein:
- the base (15) has a housing (17), and
- when the respiratory mask (5) is in the storage position and the platform (19) is in the retracted position, the platform (19) and respiratory mask (5) are at least partially housed in the housing (17), preferably the major portion of the platform (19) is inserted into the housing (17).

6. Assembly (4) according to claim 1, wherein the oronasal face cover (11) has a peripheral edge (12) and the receiving surface (35) of the platform has a protrusion (38), and wherein the peripheral edge (12) of the oronasal face cover (11) is suitable for engaging with the protrusion (38) of the receiving surface (35) when the respiratory mask (5) is in the storage position.

7. Assembly (4) according to any one of the preceding claims, wherein the harness (7) comprises an elastic tubular device having an elongate internal cavity, and the elastic tubular device is adapted to elongate according to the pressure in the internal cavity of the elastic tubular device so as to enable the crew member to insert his head into the loop (9) formed by the harness (7) when the harness (7) is in the deployed state.

8. Assembly (4) according to any one of the preceding claims, wherein the platform (19) is mounted on the base (15) so as to rotate between the retracted position and the extended position, preferably the platform pivots between 45 and 135 degrees between the retracted position and the extended position relative to the base (15).

9. Assembly (4) according to any one of the preceding claims, wherein the platform (19) is held in the retracted position by a retaining device (49), and preferably the retaining device (49) holding the platform in the retracted position is a device operating by magnetic attraction.

10. Aircraft cockpit (2) comprising a seat (3) and an assembly (4) according to any one of the preceding claims, wherein the assembly (4) is arranged substantially above the seat but laterally offset relative to the seat by 25 centimeters to 75 centimeters.

11. Method for storing an assembly (4) intended in particular to be arranged in a cockpit (2) of an aircraft having a pressurized cabin in order to supply breathing gas to a crew member, said assembly (4) comprising a respiratory mask (5) and a storage device (1), the respiratory mask (5) comprising a harness (7) forming a loop (9) adapted to be extended around the head of the user, the storage device (1) comprising a base (15) and a storage platform (19),
**characterized in that** the platform (19) is mounted so as to be movable relative to the base (15) between a retracted position and an extended position, and **in that**:
a) the platform (19) is placed in the extended position,
b) the respiratory mask (5) is brought to a storage position against a receiving surface (35) of the platform while positioning the loop (9) of the harness (7) around the platform (19), on a side opposite from the oronasal face cover (11),
c) the oronasal face cover (11) is held against the receiving surface (35) of the platform (19) while snugly fitting the harness (7) on the platform (19), then,
d) the platform (19) is moved to the retracted position.

12. Method for storing according to the preceding claim, wherein the platform (19) is extendable between a first state where the platform (19) is holding the harness (7) and a second state where the platform (19) releases the harness (7), prior to step c) the platform (19) is brought to the second state and preferably, during step c), the platform (19) is in the first state.

13. Method for storing according to any one of claims 11 and 12, wherein the platform (19) extends along a longitudinal axis (X) between a connecting end (29) and a free end (31), and is connected to the base (15) at the connecting end (29), and during step b) the harness is moved (7) relative to the platform (19) towards the connecting end (29) in order to position the loop (9) of the harness (7) around the platform (19).

14. Method for the use of an assembly (4) intended in particular to be arranged in a cockpit (2) of an aircraft having a pressurized cabin in order to provide a breathing gas to a crew member, said assembly (4) comprising a respiratory mask (5) and a storage device (1), the respiratory mask (5) comprising a harness (7) forming a loop (9) adapted to be extended around the head of the user, the storage device (1) comprising a base (15) and a storage platform (19),
**characterized in that** the platform (19) is mounted so as to be movable relative to the base (15) between a retracted position and an extended position, and **in that**:
a) the respiratory mask (5) being in a storage position against a receiving surface (35) of the platform (19), the loop (9) of the harness extending around the platform (19) on a side opposite from the oronasal face cover (11), the platform (19) is moved from the retracted position to the extended position,
b) the oronasal face cover (11) is held against the receiving surface of the platform (35), then
c) the respiratory mask (5) is released from the storage device (1).

15. Method for the use according to the preceding claim, wherein the platform (19) extends along a longitudinal axis (X) between a connecting end (29) and a free end (31), and is connected to the base (15) at the connecting end (29), and during step c) the harness (7) is moved away from the platform (19) on an side opposite from the connecting end (29) in order to release the respiratory mask (5) from the platform (19).
